# EUROPÄISCHE PATENTSCHRIFT

(11) **EP 3 159 075 B1**
(45) Veröffentlichungstag und Bekanntmachung des Hinweises auf die Patenterteilung: **23.09.2020**
(21) Anmeldenummer: 16192288.5
(22) Anmeldetag: 04.10.2016
(51) Int. Cl.: B22D 11/14, B25J 11/00

(54) **STRANGGIESSANLAGE ZUR HERSTELLUNG EINES METALLISCHEN STRANGS ODER EINER BRAMME UND VERFAHREN ZUM BETREIBEN EINER SOLCHEN STRANGGIESSANLAGE**
CONTINUOUS CASTING PLANT FOR PRODUCING A METALLIC STRAND OR A SLAB AND METHOD FOR OPERATING SUCH A CONTINUOUS CASTING PLANT
INSTALLATION DE COULÉE CONTINUE DESTINÉ À FABRIQUER UNE COULÉE MÉTALLIQUE OU UNE BRAME ET PROCÉDÉ DE FONCTIONNEMENT D'UNE TELLE INSTALLATION DE COULÉE CONTINUE

(30) Priorität: 06.10.2015 DE 102015219314; 12.10.2015 DE 102015219744
(43) Veröffentlichungstag der Anmeldung: 26.04.2017
(73) Patentinhaber: SMS group GmbH, 40237 Düsseldorf (DE)
(72) Erfinder: Moors, Mark, 40235 Düsseldorf (DE); Wissen, Christoph, 47259 Duisburg (DE); Schulze, Stephan, 40668 Meerbusch (DE); Weyer, Axel, 42349 Wuppertal (DE); Reifferscheid, Markus, 41352 Korschenbroich (DE)
(74) Vertreter: Klüppel, Walter

(56) Entgegenhaltungen:
- EP-B1- 1 750 872
- EP-B1- 2 393 636
- WO-A1-2007/057061
- DE-A1-102009 051 145
- DE-A1-102009 051 149

## Beschreibung

Die Erfindung betrifft eine Stranggießanlage zur Herstellung eines metallischen Strangs, wobei die Stranggießanlage mindestens einen Roboter aufweist. Des Weiteren betrifft die Erfindung ein Verfahren zum Betreiben einer solchen Stranggießanlage.

Gattungsgemäße Lösungen sind aus der WO 2007/057061 A1, aus der EP 2 393 636 B1 und aus der EP 1 750 872 B1 bekannt. Ähnliche Lösungen offenbaren die DE 10 2009 051 149 A1 und die DE 10 2009 051 145 A1.

Zur Sicherung einer guten Produktqualität wird bekanntermaßen in einer Stranggießanlage der Strang bzw. die Bramme durch eine Vielzahl von Sensoren unterschiedlicher Funktion überwacht und gemessen. Beispielsweise wird mittels Pyrometer die Oberflächentemperatur des Strangs oder der Bramme erfasst. Laserscanner oder Radarsensoren dienen zur Prüfung der Geometrie des Strangs oder der Bramme. Kameras dienen zur Prüfung der Oberfläche des Strangs oder der Bramme. Weiterhin sind Ultraschallsensoren zur Prüfung der Innenqualität des Strangs oder der Bramme bekannt. Die Sensoren können an unterschiedlichen Stellen der Stranggießanlage untergebracht werden, wobei sie insbesondere ortsfest platziert sind.

Oft ist es von Vorteil, einen Sensor nicht nur an einem Ort zu verwenden, sondern an verschiedenen Stellen positionieren zu können. Hierzu ist es bekannt, die Sensoren entlang einer Achse auf dem Strang oder über den Strang zu bewegen.

Nachteilig ist es bei dieser Lösung, dass die möglichen Einsatzorte der Sensoren immer noch stark beschränkt sind und die verwendeten Vorrichtungen einer sehr starken thermischen Belastung ausgesetzt sind.

Nachteilig ist es weiterhin, dass für die Messung Oberflächenbedingungen am Strang vorliegen, die die Messung nachteilig beeinflussen. Es wäre von Vorteil, für sensorische Messungen die Möglichkeit zu schaffen, eine Manipulation der Strangoberfläche vorzusehen. So könnten beispielsweise Kameras erheblich bessere Daten von der Strangoberfläche aufnehmen, wenn die den Strang umschließende Zunderschicht vor der Kamera-Aufnahme des Strangs entfernt würde.

Der Erfindung liegt die Aufgabe zugrunde, eine gattungsgemäße Stranggießanlage sowie ein Verfahren zu deren Betrieb vorzuschlagen, die bzw. das es ermöglicht, eine verbesserte und flexible Analyse des Strangs oder der Bramme durchzuführen.

Die Lösung dieser Aufgabe durch die Erfindung ist dadurch gekennzeichnet, dass der Roboter als mehrachsiger Roboter ausgebildet ist, der mit einem Ende eines Roboterarms einen Sensor und ein Bearbeitungswerkzeug über den Strang oder die Bramme führen kann, wobei der Roboter auf einer Verfahreinheit platziert ist, mit der der Roboter in Förderrichtung des Strangs oder der Bramme und/oder senkrecht oder quer zur Förderrichtung bewegt werden kann, wobei der Roboter und die Verfahreinheit am Auslauf der Strangführung der Stranggießanlage oder am Brammenauslauf angeordnet sind und wobei der Roboter ausgebildet ist, einen Sensor und ein Bearbeitungswerkzeug synchron mit der Bewegung des Strangs oder der Bramme in Förderrichtung des Strangs oder der Bramme zu führen.

Der Roboter hat bevorzugt des Weiteren ein Magazin, in dem eine Anzahl an Sensoren und/oder Bearbeitungswerkzeugen platziert sind, die mittels eines Wechselsystems automatisiert am Ende des Roboterarms montiert und demontiert werden können.

Der mindestens eine Sensor ist dabei insbesondere ausgebildet, eine geometrische Größe des Strangs bzw. der Bramme, die Temperatur des Strangs bzw. der Bramme oder die chemische Zusammensetzung des Materials des Strangs bzw. der Bramme zu erfassen.

Das mindestens eine Bearbeitungswerkzeug ist bevorzugt ausgebildet, einen spanenden Bearbeitungsvorgang, insbesondere einen Schleifvorgang oder einen Bohrvorgang, an der Oberfläche des Strangs bzw. der Bramme oder eine Entzunderung der Oberfläche des Strangs bzw. der Bramme auszuführen.

Damit der Sensor bzw. das Bearbeitungswerkzeug bevorzugt synchron besser der Bewegung des Strangs bzw. der Bramme folgen kann, sieht die erfindungsgemäße Ausgestaltung vor, dass der Roboter auf der Verfahreinheit (Fördervorrichtung) platziert ist, mit der der Roboter in Förderrichtung des Strangs bzw. der Bramme bewegt werden kann.

Die erfindungsgemäß vorgesehene Verfahreinheit kann den Roboter sowohl in Förderrichtung des Strangs bzw. der Bramme bewegen als auch senkrecht oder quer dazu. Bei einer Bewegung senkrecht oder quer zur Förderrichtung wird, bedingt durch die kinematischen Einschränkungen des Roboters, der tatsächliche Arbeitsraum größer. So ist es nur sehr schwer möglich, sowohl die Oberfläche des Strangs bzw. der Bramme von oben als auch die Seitenflächen von der Seite zu betrachten, ohne den Roboter ein Stück vom Strang bzw. von der Bramme wegbewegen zu können. Diese Schwierigkeit wird beim Einsatz einer Verfahreinheit eliminiert, die den Roboter bewegt.

Der Roboter und die Verfahreinheit sind erfindungsgemäß am Auslauf der Strangführung der Stranggießanlage angeordnet. In diesem Falle kann der Strang bzw. die Bramme im Strangauslaufbereich bzw. im Brammenauslauf besonders günstig manipuliert und/oder vermessen werden.

Der Roboter kann auch in der Kühlkammer der Stranggießanlage angeordnet sein.

Das vorgeschlagene Verfahren zum Betreiben einer solchen Stranggießanlage sieht erfindungsgemäß die Abfolge folgender Schritte vor:
a) Bestücken des Roboters mit einem Bearbeitungswerkzeug und Bearbeiten einer definierten Stelle des Strangs oder der Bramme mit dem Bearbeitungswerkzeug;
b) Entfernen des Bearbeitungswerkzeugs aus dem Roboter;
c) automatisiertes Bestücken des Roboters mit einem Sensor aus einem Magazin;
d) Vermessen einer Stelle des Strangs oder der Bramme mit dem Sensor,
wobei ein Basisteil des Roboters bei der Durchführung zumindest eines der Schritte c) und d) mittels einer Verfahreinheit in Förderrichtung des Strangs oder der Bramme verschoben wird.

Die Erfindung betrifft somit eine Vorrichtung und ein entsprechendes Verfahren zur messtechnischen Erfassung von relevanten Parametern in einer Stranggießanlage. Mit der vorgeschlagenen Vorrichtung und dem entsprechenden Verfahren ist es möglich, eine effektive Prüfung des Strangs bzw. der Bramme innerhalb der Stranggießanlage vorzunehmen.

Das erfindungsgemäße Konzept basiert also auf der Idee, einen mehrachsigen Industrieroboter einzusetzen, um verschiedene Sensoren auf dem oder über den Strang bzw. die Bramme zu führen; auch soll die Möglichkeit geschaffen werden, den Strang bzw. die Bramme vor der Messung an der zu vermessenden Stelle zu manipulieren, d. h. zu bearbeiten, um verbesserte Messdaten zu gewinnen. Die Sensoren sind ausgebildet, eine Eigenschaft des Strangs bzw. der Bramme (beispielsweise betreffend die Geometrie, die Chemie, Defekte und die Temperatur) zu erfassen; bevorzugt weist das vorgeschlagene System dabei mindestens zwei verschiedene Sensoren auf. Weiterhin können Werkzeuge zur Bearbeitung (beispielsweise zum Flämmen, Schleifen, Entzundern, Nadeln und Bohren) vom Roboter geführt werden.

Eine Messaufgabe wird bevorzugt so durchgeführt, dass der Strang bzw. die Bramme zunächst mit einem Effektor des Roboters bearbeitet und anschließend die bearbeitete Stelle einer Messung unterzogen wird. Bevorzugt wird der Roboter dabei zusätzlich mittels einer geeigneten Vorrichtung bewegt.

In dem zu vermessenden Bereich der Stranggießanlage, beispielsweise und bevorzugt im Brammenauslauf, wird ein mehrachsiger Industrieroboter platziert. Der Roboter verfügt über ein Greiferwechselsystem, um verschiedene Sensoren oder Manipulatoren aus einem entsprechenden Magazin entnehmen zu können. Bevorzugt sind die Anschlüsse und Versorgungen der Sensoren und Manipulatoren durch die Roboter geführt; es können aber auch externe Versorgungsleitungen zu dem Sensor oder dem Effektor des Roboters führen. Im letztgenannten Fall muss die Bewegung des Roboters darauf eingeschränkt
werden, dass die Kabel und Leitungen vom Sensor oder Manipulator nicht abgerissen oder beschädigt werden.

Der Roboter kann nun einen Sensor aus dem Magazin entnehmen und in eine messtechnisch günstige Position über, unter oder neben dem Strang bzw. die Bramme führen.

In einer bevorzugten Ausgestaltung der Erfindung kann der Roboter auch selber auf eine Apparatur - beispielsweise eine Lineareinheit oder einer Schwenkachse - gestellt werden, um seinen Operationsradius zu vergrößern und auch größere Strangoberflächen vollständig abdecken zu können. Ebenso ist es möglich (aber nicht erfindungsgemäß vorgesehen), den Roboter mit der Brennschneidemaschine zu verbinden, so dass während des Brennschneidvorgangs Messungen und Manipulationen durchgeführt werden können, ohne dass der Roboter sich noch zusätzlich mit dem Strang bzw. der Bramme mitbewegen muss.

Eine Erweiterung der vorgeschlagenen Lösung sieht vor, dass die von dem Roboter gemessenen Daten direkt auf die Steuerung der Stranggießmaschine einwirken und so eine direkte Rückkopplung der Signale auf die produzierte Qualität ermöglicht wird. Hierbei kann beispielsweise eine festgestellte Abweichung in der Geometrie des Strangs bzw. der Bramme direkt auf die Einstellung der vorhergehenden Stranggießsegmente oder der Kokille erfolgen, um die Abweichung für die sich anschließende Produktion zu minimieren. Die vom Sensor gemessenen Daten können also demgemäß direkt in die Steuerung der Stranggießanlage eingesteuert und berücksichtigt werden.

Durch den Einsatz des mehrachsigen Industrieroboters ergeben sich eine Reihe von Vorteilen gegenüber den vorbekannten Lösungen, wie beispielsweise Lineareinheiten oder ortsfeste Sensoren.

So kann sich ein robotergeführter Sensor mit dem Strang bzw. mit der Bramme mitbewegen, so dass eine längere Untersuchung einer bestimmten Stelle im Strang bzw. in der Bramme erlaubt wird.

Bewegt sich der Strang bzw. die Bramme nicht übermäßig schnell, kann der Roboter eine bestimmte Stelle im Strang bzw. in der Bramme messen, den Sensor dann wechseln und dann dieselbe Stelle ein weiteres Mal mit einem anderen Sensor messen, was eine Integration unterschiedlicher Sensoren erlaubt.

Der Wechsel oder die Wartung von Sensoren ist im laufenden Betrieb mit der erfindungsgemäßen Lösung deutlich vereinfacht, da das Magazin für den Arbeiter deutlich leichter erreicht werden kann, als eine Position direkt am oder über dem Strang bzw. der Bramme.

Beim Einsatz unterschiedlicher Messverfahren ist der Platzbedarf einer solchen roboterbasierten Anlage deutlich reduziert gegenüber einer konventionellen Anlage wo die Sensoren - und gegebenenfalls ihre notwendigen Verfahrachsen - alle am Strang untergebracht werden müssen.

Bei einer entsprechenden Aufstellung ist es möglich, den Strang bzw. die Bramme von mehreren Seiten - d. h. von der Unterseite, der Oberseite und den Kanten bzw. Seiten - mit einer Anlage abzutasten bzw. zu prüfen.

In der Zeichnung ist ein Ausführungsbeispiel der Erfindung dargestellt.

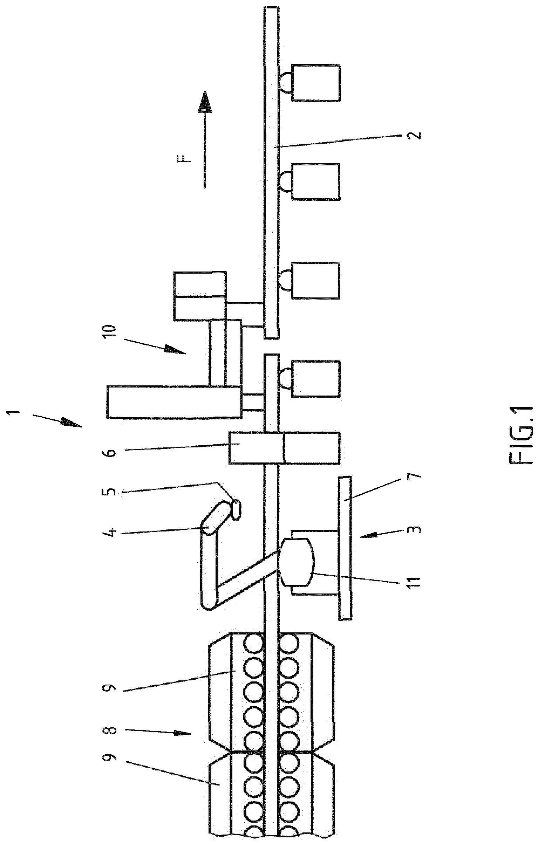

- Fig. 1: zeigt schematisch einen Teil einer Stranggießanlage in der Seitenansicht und
- Fig. 2: zeigt schematisch die Stranggießanlage in der Draufsicht.

In den Figuren ist ein Teil einer Stranggießanlage 1 zu sehen, in der ein Strang 2 hergestellt wird. Von einer Strangführung 8 ist der letzte Abschnitt in Förderrichtung F zu erkennen; dabei sind Segmente 9 der Strangführung 8 dargestellt. Der Strang 2 passiert im weiteren Verlauf eine Brennschneidmaschine 10.

Am Auslauf der Strangführung 8 ist ein Roboter 3 angeordnet, der als mehrachsiger Industrieroboter ausgebildet ist. Er weist einen Roboterarm 4 auf, an dessen Ende ein Sensor 5 oder ein - nicht dargestelltes - Bearbeitungswerkzeug angeordnet werden kann.

Weiter vorhanden ist ein Magazin 6, in dem diverse Sensoren 5 bzw. Bearbeitungswerkzeuge gelagert sind. Nicht dargestellt ist ein automatisiertes Wechselsystem, mit dem Sensoren 5 bzw. Bearbeitungswerkzeuge am Ende des Roboterarms 4 montiert bzw. demontiert werden können. Derartige Wechselsystems sind im Stand der Technik bekannt.

Der Strang 2 verlässt in Förderrichtung F die Strangführung 8 durch das letzte Segment 9. Die Brennschneidmaschine 10 teilt den Strang horizontal durch und erzeugt damit die Bramme.

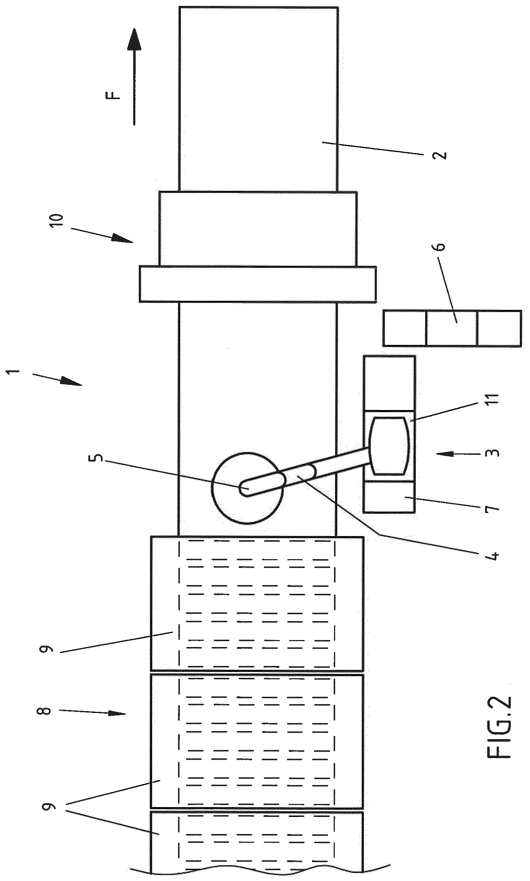

Im dargestellten Fall wurde der Roboter 3 bereits mit einem Sensor 5 bestückt, der automatisiert aus dem Magazin 6 entnommen und am Ende des Roboterarms 4 montiert wurde. Der Sensor 5 ist vorliegend ausgebildet, eine geometrische Eigenschaft des Strangs 2 zu messen. Konkret handelt es sich im vorliegenden Falle bei dem Sensor um eine Kamera, die einen entsprechenden Bereich des Strangs 2 aufnehmen kann. Aus der Darstellung gemäß Figur 2 ergibt sich, dass der Sensor 5 in Form der Kamera von oben die Strangoberfläche aufnimmt.

Schematisch angedeutet ist auch eine Verfahreinheit 7, mit der ein Basisteil 11 des Roboters 3 in Förderrichtung F bewegt werden kann.

Gemäß einer bevorzugten Betriebsweise wird zunächst mittels eines Bearbeitungswerkzeugs eine definierte Stelle des Strangs 2 bearbeitet, beispielsweise durch spanende Bearbeitung freigelegt. Anschließend erfolgt ein automatisiertes Wechseln vom Bearbeitungswerkzeug auf einen Sensor, d. h. das Bearbeitungswerkzeug wird entnommen und im Magazin 6 platziert; anschließend wird ein Sensor 5 aus dem Magazin 6 entnommen und am Ende des Roboterarms 4 montiert.

Anhand des Roboters 3 und unter Zuhilfenahme der Verfahreinheit 7 wird dann synchron mit der Bewegung des Strangs 2 in Förderrichtung F die vorbearbeitete Stelle des Strangs 2 vom Sensor 5 vermessen bzw. untersucht.

Der Roboter 3 und die Verfahreinheit 7 sorgen also dafür, dass eine definierte Stelle des Strangs 2 synchron mit der Bewegung des Strangs 2 in Förderrichtung F (mittels eines Bearbeitungswerkzeugs) präpariert und (mittels eines Sensors 5) analysiert wird.

### Bezugszeichenliste:

- 1: Stranggießanlage
- 2: Strang / Bramme
- 3: Roboter
- 4: Roboterarm
- 5: Sensor
- 6: Magazin
- 7: Verfahreinheit (Fördervorrichtung)
- 8: Strangführung
- 9: Segment
- 10: Brennschneidmaschine
- 11: Basisteil

- F: Förderrichtung

## Patentansprüche

1. Stranggießanlage (1) zur Herstellung eines metallischen Strangs (2) oder einer Bramme, wobei die Stranggießanlage (1) mindestens einen Roboter (3) aufweist,
**dadurch gekennzeichnet,**
**dass** der Roboter (3) als mehrachsiger Roboter ausgebildet ist, der mit einem Ende eines Roboterarms (4) einen Sensor (5) und ein Bearbeitungswerkzeug über den Strang (2) oder die Bramme führen kann, wobei der Roboter (3) auf einer Verfahreinheit (7) platziert ist, mit der der Roboter (3) in Förderrichtung (F) des Strangs (2) oder der Bramme und/oder senkrecht oder quer zur Förderrichtung (F) bewegt werden kann, wobei der Roboter (3) und die Verfahreinheit (7) am Auslauf der Strangführung (8) der Stranggießanlage (1) oder am Brammenauslauf angeordnet sind und wobei der Roboter (3) ausgebildet ist, einen Sensor (5) und ein Bearbeitungswerkzeug synchron mit der Bewegung des Strangs (2) oder der Bramme in Förderrichtung (F) des Strangs (2) oder der Bramme zu führen.

2. Stranggießanlage nach Anspruch 1, **dadurch gekennzeichnet, dass** der Roboter (3) ein Magazin (6) aufweist, in dem eine Anzahl an Sensoren (5) und/oder Bearbeitungswerkzeugen platziert sind, die mittels eines Wechselsystems automatisiert am Ende des Roboterarms (4) montiert und demontiert werden können.

3. Stranggießanlage nach Anspruch 1 oder 2, **dadurch gekennzeichnet, dass** der mindestens eine Sensor (5) ausgebildet ist, eine geometrische Größe des Strangs (2) oder der Bramme zu erfassen.

4. Stranggießanlage nach Anspruch 1 oder 2, **dadurch gekennzeichnet, dass** der mindestens eine Sensor (5) ausgebildet ist, die Temperatur des Strangs (2) oder der Bramme zu erfassen.

5. Stranggießanlage nach Anspruch 1 oder 2, **dadurch gekennzeichnet, dass** der mindestens eine Sensor (5) ausgebildet ist, die chemische Zusammensetzung des Materials des Strangs (2) oder der Bramme zu erfassen.

6. Stranggießanlage nach einem der Ansprüche 1 bis 5, **dadurch gekennzeichnet, dass** das mindestens eine Bearbeitungswerkzeug ausgebildet ist, einen spanenden Bearbeitungsvorgang, insbesondere einen Schleifvorgang oder einen Bohrvorgang, an der Oberfläche des Strangs (2) oder der Bramme auszuführen.

7. Stranggießanlage nach einem der Ansprüche 1 bis 5, **dadurch gekennzeichnet, dass** das mindestens eine Bearbeitungswerkzeug ausgebildet ist, einen thermischen Bearbeitungsvorgang, insbesondere einen Flämmvorgang, an der Oberfläche des Strangs (2) oder der Bramme auszuführen.

8. Stranggießanlage nach einem der Ansprüche 1 bis 5, **dadurch gekennzeichnet, dass** das mindestens eine Bearbeitungswerkzeug ausgebildet ist, eine Entzunderung der Oberfläche des Strangs (2) oder der Bramme auszuführen.

9. Verfahren zum Betreiben einer Stranggießanlage (1) nach einem der Ansprüche 1 bis 8,
**dadurch gekennzeichnet,**
**dass** es die Abfolge folgender Schritte aufweist:
a) Bestücken des Roboters (3) mit einem Bearbeitungswerkzeug und Bearbeiten einer definierten Stelle des Strangs (2) oder der Bramme mit dem Bearbeitungswerkzeug;
b) Entfernen des Bearbeitungswerkzeugs aus dem Roboter (3);
c) automatisiertes Bestücken des Roboters (3) mit einem Sensor (5) aus einem Magazin (6);
d) Vermessen einer Stelle des Strangs (2) oder der Bramme mit dem Sensor (5),
wobei ein Basisteil (11) des Roboters (3) bei der Durchführung zumindest einesr der Schritte c) und d) mittels einer Verfahreinheit (7) in Förderrichtung (F) des Strangs (2) oder der Bramme verschoben wird.

## Claims

1. Continuous casting plant (1) for production of a metallic strip (2) or a slab, wherein the continuous casting plant (1) comprises at least one robot (3),
**characterised in that**
the robot (3) is constructed as a multi-axis robot which by one end of a robot arm (4) can guide a sensor (5) and a processing tool over the strip (2) or the slab, wherein the robot (3) is placed on a travel unit (7) by which the robot (3) can be moved in conveying direction (F) of the strip (2) or slab and/or perpendicularly or transversely to the conveying direction (F), wherein the robot (3) and the travel unit (7) are arranged at the outlet of the strip guide (8) of the continuous casting plant (1) or at the slab outlet and wherein the robot (3) is constructed to guide a sensor (5) and a processing tool synchronously with the movement of the strip (2) or the slab in the conveying direction (F) of the strip (2) or slab.

2. Continuous casting plant according to claim 1, **characterised in that** the robot (3) comprises a magazine (6) in which a number of sensors (5) and/or processing tools, which can be automatically mounted and demounted at the end of the robot arm (4) by means of a change system, is placed.

3. Continuous casting plant according to claim 1 or 2, **characterised in that** the at least one sensor (5) is configured to detect a geometric size of the strip (2) or slab.

4. Continuous casting plant according to claim 1 or 2, **characterised in that** the at least one sensor (5) is constructed to detect the temperature of the strip (2) or slab.

5. Continuous casting plant according to claim 1 or 2, **characterised in that** the at least one sensor (5) is constructed to detect the chemical composition of the material of the strip (2) or slab.

6. Continuous casting plant according to any one of claims 1 to 5, **characterised in that** the at least one processing tool is constructed to execute a machining process, particularly a grinding process or a drilling process, at the surface of the strip (2) or slab.

7. Continuous casting plant according to any one of claims 1 to 5, **characterised in that** the at least one processing tool is constructed to execute a thermal process, particularly a process with flame, at the surface of the strip (2) or slab.

8. Continuous casting plant according to any one of claims 1 to 5, **characterised in that** the at least one processing tool is constructed to execute descaling of the surface of the strip (2) or slab.

9. Method of operating a continuous casting plant (1) according to any one of claims 1 to 8,
**characterised in that**
it comprises the sequence of the following steps:
a) equipping the robot (3) with a processing tool and processing a defined location of the strip (2) or slab by the processing tool;
b) removing the processing tool from the robot (3);
c) automated equipping of the robot (3) with a sensor (5) from a magazine (6);
d) measuring a location of the strip (2) or slab by the sensor (5),
wherein a base part (11) of the robot (3) is displaced by means of a travel unit (7) in the conveying direction (F) of the strip (2) or slab during performance of at least one of the steps c) and d).

## Revendications

1. Installation de coulée continue (1) qui est destinée à la fabrication d'une barre métallique (2) ou d'une brame ; dans laquelle l'installation de coulée continue (1) présente au moins un robot (3), **caractérisée**
**en ce que** le robot (3) est réalisé sous la forme d'un robot du type à axes multiples, qui peut guider avec une extrémité d'un bras de robot (4) un capteur (5) et un outil de traitement par-dessus la barre (2) ou la brame ; dans laquelle le robot (3) est placé sur une unité de déplacement (7) avec laquelle le robot peut faire l'objet d'un déplacement dans la direction de transport (F) de la barre (2) ou de la brame et/ou en position perpendiculaire ou en position transversale par rapport à la direction de transport (F) ; dans laquelle le robot (3) et l'unité de déplacement (7) sont disposés à la sortie du guidage de barre (8) de l'installation de coulée continue (1) ou à la sortie de la brame ; et dans laquelle le robot (3) est réalisé dans le but de guider un capteur (5) et un outil de traitement de manière synchrone avec le mouvement de la barre (2) ou de la brame dans la direction de transport (F) de la barre (2) ou de la brame.

2. Installation de coulée continue selon la revendication 1, **caractérisée en ce que** le robot (3) présente un magasin (6) dans lequel sont classés un certain nombre de capteurs (5) et/ou d'outils de traitement qui peuvent être montés et démontés au moyen d'un système d'échange de manière automatisée à l'extrémité du bras de robot (4).

3. Installation de coulée continue selon la revendication 1 ou 2, **caractérisée en ce que** ledit au moins un capteur (5) est réalisé pour enregistrer une valeur géométrique de la barre (2) ou de la brame.

4. Installation de coulée continue selon la revendication 1 ou 2, **caractérisée en ce que** ledit au moins un capteur (5) est réalisé pour enregistrer la température de la barre (2) ou de la brame.

5. Installation de coulée continue selon la revendication 1 ou 2, **caractérisée en ce que** ledit au moins un capteur (5) est réalisé pour enregistrer la composition chimique de la matière de la barre (2) ou de la brame.

6. Installation de coulée continue selon l'une quelconque des revendications 1 à 5, **caractérisée en ce que** ledit au moins un outil de traitement est réalisé dans le but de mettre en œuvre un processus d'usinage par enlèvement de copeaux, en particulier un processus de meulage ou un processus d'alésage, à la surface de la barre (2) ou de la brame.

7. Installation de coulée continue selon l'une quelconque des revendications 1 à 5, **caractérisée en ce que** ledit au moins un outil de traitement est réalisé dans le but de mettre en oeuvre un processus d'usinage de type thermique, en particulier un processus de décriquage, à la surface de la barre (2) ou de la brame.

8. Installation de coulée continue selon l'une quelconque des revendications 1 à 5, **caractérisée en ce que** ledit au moins un outil de traitement est réalisé dans le but de mettre en oeuvre un décalaminage, à la surface de la barre (2) ou de la brame.

9. Procédé qui est destiné à l'exploitation d'une installation de coulée continue (1) selon l'une quelconque des revendications 1 à 8, **caractérisé**
**en ce qu'**il présente la succession des étapes indiquées ci-après dans lesquelles :
a) on équipe le robot (3) d'un outil de traitement et on procède à l'usinage d'un endroit défini de la barre (2) ou de la brame avec l'outil de traitement ;
b) on éloigne l'outil de traitement par rapport au robot (3) ;
c) on procède à l'équipement automatisé du robot (3) avec un capteur (5) que l'on prélève d'un magasin (6) ;
d) on mesure un endroit de la barre (2) ou de la brame avec le capteur (5) ;
dans lequel une partie de base (11) du robot (3), lors de la mise en œuvre d'au moins une des étapes c) et d), est soumise à un déplacement au moyen d'une unité de déplacement (7) dans la direction de transport (F) de la barre (2) ou de la brame.
